# EUROPÄISCHE PATENTSCHRIFT

(11) **EP 2 500 615 B1**
(45) Veröffentlichungstag und Bekanntmachung des Hinweises auf die Patenterteilung: **14.09.2016**
(21) Anmeldenummer: 12159870.0
(22) Anmeldetag: 16.03.2012
(51) Int. Cl.: F16L 55/26, G01B 11/12, G06T 7/00

(54) **Verfahren zur Bestimmung eines Rohrdurchmessers**
Method for determining a tube diameter
Procédé de détermination d'un diamètre de tuyau

(30) Priorität: 18.03.2011 DE 102011001388
(43) Veröffentlichungstag der Anmeldung: 19.09.2012
(73) Patentinhaber: SPERING micro-systems, 52076 Aachen (DE)
(72) Erfinder: Spering, Axel, 52076 Aachen (DE); Schmitz, Mario, 52078 Aachen (DE); Goßen, Sascha, 52538 Gangelt (DE); Zantis, Michael, 52080 Aachen (DE)
(74) Vertreter: Bauer, Dirk

(56) Entgegenhaltungen:
- EP-A2- 1 229 303
- DE-A1-102005 044 574
- DE-A1-102007 038 785
- DE-U1- 20 308 761
- US-A- 3 739 089
- US-A1- 2008 068 600

## Beschreibung

### Einleitung

Die Erfindung betrifft ein Verfahren zur Bestimmung eines Rohrdurchmessers mittels einer Vorrichtung, aufweisend ein Kameraelement und ein Bildwiedergabeelement, aufweisend folgenden Verfahrensschritt:
a) Das Kameraelement wird in einem Rohr in einer ersten Position positioniert.

### Stand der Technik

Im Rahmen der Rohrvermessung gehören Verfahren der eingangs beschriebenen Art heutzutage zum Stand der Technik. In diesem Zusammenhang sind auch Kanäle, insbesondere Abwasserkanäle, als Rohre zu verstehen.

Ein gängiges Verfahren sieht beispielsweise die Vermessung eines Rohres mittels einer Aufzeichnung eines projizierten Laserrings vor. Dieser wird über eine in dem jeweilig zu messenden Rohr befindliche Laserdiode auf eine innere Mantelfläche einer Rohrwandung des Rohres projiziert. Diese Projektion wird mittels einer Kamera aufgezeichnet und die so festgehaltenen Daten werden anschließend über eine Software ausgewertet. Neben einer Bestimmung eines Rohrdurchmessers lassen sich mit dieser Technik ferner Aussagen über Einschlüsse und Deformationen treffen. Der Nachteil einer derartigen Technik liegt in der hohen Empfindlichkeit der Messvorrichtung und in der verhältnismäßig aufwendigen Auswertung der Messdaten. Externe Hardware in Form von Recheneinheiten beziehungsweise Computern ist ebenso nötig, wie ein neben der eigentlichen Arbeit in einem Rohr anfallender Arbeitsaufwand zur Verarbeitung der Daten durch fachlich geschultes Personal. Dies wirkt sich negativ auf die Kosten und die Dauer zur Durchführung eines derartigen Verfahrens aus.

Auch die DE 10 2005 044 574 A1 beschreibt ein Verfahren zur Bestimmung eines Kanaldurchmessers, wobei eine vorzugsweise parallel zu der Rohrachse ausgerichtete Kamera über einen Schwenkarm in verschiedene Höhen verfahrbar ist. Ein Vergleich von zwei in verschiedener Höhe aufgenommener Bilder soll dann Rückschlüsse auf den vorhandenen Rohrdurchmesser geben.

### Aufgabe

Der Erfindung liegt die Aufgabe zugrunde, ein Verfahren der eingangs beschriebenen Art dahingehend weiterzuentwickeln, dass es möglich ist, eine Bestimmung eines Rohrdurchmessers deutlich schneller und günstiger durchzuführen, als es nach dem Stand der Technik der Fall ist.

### Lösung

Die Aufgabe wird erfindungsgemäß und gemäss Anspruch 1 durch die folgenden Verfahrensschritte gelöst:
b) Mittels des Kameraelements wird ein erstes Abbild des Rohres aufgenommen, wobei eine optische Achse des Kameraelements in etwa parallel zu einer Längsachse des Rohres ausgerichtet ist.
c) Das Kameraelement wird entweder virtuell mittels einer Zoomfunktion des Kameraelements oder physisch über eine definierte Strecke im Wesentlichen parallel zu der Längsachse des Rohres in eine zweite Position bewegt.
d) Mittels des Kameraelements wird ein zweites Abbild aufgenommen, wobei die optische Achse in etwa parallel zu der Längsachse des Rohres ausgerichtet ist.
e) Durch einen Vergleich der beiden Abbilder wird der Rohrdurchmesser bestimmt.

Ein durch diese Verfahrensschritte gekennzeichnetes Verfahren zeichnet sich insbesondere über eine besonders einfache und überaus zügige Durchführbarkeit aus. Eine spezielle Vorrichtung ist nicht erforderlich. Zur Durchführung dieses Verfahrens geeignete Kameraelemente und Bildwiedergabeelemente sind heutzutage weit verbreitet und kommen im Bereich von Rohr- beziehungsweise Kanalinspektionen täglich zum Einsatz.

Vor einer Aufnahme des ersten Abbildes des Rohres ist es nicht notwendig, das Kameraelement in besonderer Weise in einem Querschnitt in dem jeweils zu untersuchenden Rohr zu positionieren. Aufgrund wirkender Schwerkraft befindet es sich hingegen zumeist in der Sohle des Rohres. Für eine erfolgreiche Durchführung des erfindungsgemäßen Messverfahrens ist dies nicht relevant, eine Ausrichtung des Kameraelements beispielsweise auf einer Mittelachse des Rohres - wie es nach dem Stand der Technik häufig notwendig ist - herbei zu führen. Einzig eine Ausrichtung der optischen Achse des Kameraelements muss beachtet werden. Diese ist in eine in etwa zu einer Längsachse des Rohres parallele Richtung zu orientieren. Winkelabweichungen von einer genauen Parallelität von der Längsachse des Rohres im Bereich von ± 10° sind nicht problematisch. Da übliche Kameraelemente beispielsweise auf Fahrrobotern montiert sind, ist eine derartige Ausrichtung eines Aufnahmebereichs des Kameraelements und somit der optischen Achse ohnehin in fast allen Fällen ohne weiteres Zutun gegeben. Ein besonderer Arbeitsaufwand aufgrund einer erforderlichen Ausrichtung entsteht nicht.

Nach einer Aufnahme des ersten Abbildes können generell zwei verschiedene Vorgehensweisen gewählt werden, die sich dem Grundprinzip nach nicht unterscheiden, in der Durchführung jedoch unterschiedlich sind. Die erste Möglichkeit sieht vor, vor einer Aufnahme eines zweiten Abbildes des Rohres das Kameraelement zu bewegen. Üblicherweise wird es dabei im Wesentlichen parallel zu der Längsachse des Rohres um eine definierte Strecke in eine von einer Aufnahmerichtung des Kameraelements abgewandte Richtung bewegt. Mit im Wesentlichen parallel zu der Längsachse des Rohres soll gemäß der vorliegenden Anmeldung eine genau parallele oder annähernd parallele Bewegung des Kameraelements verstanden werden, wobei die annähernd parallele Bewegung oftmals aufgrund der örtlichen Begebenheiten, also dem Untergrund, auf dem das Kameraelement bewegt wird, zurück zu führen ist. Insbesondere sollen Abweichungen zwischen der Längsachse des Rohres und der Bewegung des Kameraelements von ± 5° als im Wesentlichen parallel verstanden werden. Eine Bewegung in eine entgegen gesetzte Richtung ist aber ebenso denkbar. In einem beispielhaften Fall einer "Rückwärtsbewegung" wird durch die Aufnahme des zweiten Abbildes dem Anwender eine Information geliefert, um wie viel kleiner ein Durchmesser an einer expliziten Stelle des Rohres, einem so genannten "Messschnitt", in dem zweiten Abbild gegenüber dem ersten Abbild erscheint. Der Messschnitt ist dabei als eine Schnittkurve einer zu der optischen Achse senkrechten Ebene mit einer Wandung des Rohres definiert und sollte entsprechend in beiden Abbildern enthalten sein. Vorteilhafterweise sollte der Messschnitt derart relativ zu dem Kameraelement positioniert werden, dass er das erste Abbild annähernd ausfüllt. Darunter ist zu verstehen, dass der Messschnitt in einer solchen Weise nah an zumindest zwei gegenüber liegenden Rändern des Abbildes liegen sollte, dass eine weitere Vergrößerung des Messschnitts in dem Abbild- bedingt durch eine Veränderung einer relative Positionierung des Kameraelements und des Messschnitts zueinander - dazu führen würde, dass der Messschnitt nicht länger vollständig auf dem Abbild erkennbar ist.

Unter einer relativen Positionierung zueinander ist hierbei sowohl eine virtuelle als auch eine physische Positionierung gemeint. Es ist also gleichermaßen denkbar, den Messschnitt sowohl mittels eines Zooms als auch mittels einer Lageänderung des Kameraelements in dem Abbild zu positionieren. Die Positionierung kann unmittelbar anhand des zur Vorrichtung gehörenden Bildwiedergabeelements gesteuert werden. Besonders einfach ist dies für den Fall, dass ein gewünschter Bereich, in dem der Messschnitt auf dem Abbild positioniert werden sollte, bereits auf dem Bildwiedergabeelement mittels eingeblendeter Hilfslinien graphisch veranschaulicht wird. Ein Anwender muss in einem solchen Fall die Positionierung lediglich so vornehmen, dass der Messschnitt beispielsweise in einem Bereich zwischen Hilfslinien oder direkt auf einer bestimmten Hilfslinie liegt. Dadurch, dass der Messschnitt das erste Abbild annähernd ausfüllt, ist zu erwarten, dass eine Durchmesseränderung des Messschnitts zwischen dem ersten und dem zweiten Abbild deutlich erkennbar und messbar ist.

Die optische Achse des Kameraelements sollte bei der Aufnahme des zweiten Abbilds in etwa gegenüber der Aufnahme des ersten Abbilds gleich ausgerichtet sein. Auch hier sind Abweichungen der Orientierungen der optischen Achse während der ersten und der zweiten Aufnahme im Bereich von ± 10° für eine erfolgreiche Messung nicht hinderlich. Aufgrund der Tatsache, dass Rohre im Wesentlichen aus geraden Abschnitten bestehen und keine kontinuierlichen Krümmungen aufweisen, ist eine in etwa gleiche Ausrichtung der optischen Achse des Kameraelements während der ersten und der zweiten Aufnahme eines Abbildes besonders einfach einstellbar.

Um schließlich aus einem Vergleich der beiden Abbilder den jeweilig vorliegenden Rohrdurchmesser zu bestimmen, sollte vorzugsweise eine Vergleichsmethodik eingesetzt werden, die darauf beruht, dass aus einer Differenz zwischen den Durchmessern des Messschnitts in dem ersten und dem zweiten Abbild ein Gradient bezüglich einer vom dem Kameraelement zurückgelegten Strecke ermittelt wird, aus dem ein Rückschluss auf den Rohrdurchmesser gezogen wird.

Diese Vorgehensweise beruht auf der Erkenntnis, dass eine Veränderung der Größe des spezifischen, an einer bestimmten Stelle des Rohres platzierten Messschnitts von dem ersten zu dem zweiten Abbild in Abhängigkeit der definierten Strecke unterschiedlich stark ausfällt, je nachdem, welcher Rohrdurchmesser im einzelnen vorliegt. Umso größer der Rohrdurchmesser ist, desto geringer ist eine Differenz der aus den Abbildern zu messenden Durchmesser des Messschnitts zwischen den beiden Abbildern. Umgekehrt führt ein verhältnismäßig kleiner Rohrdurchmesser zu einer größeren Differenz der aus den Abbildern auszulesenden Durchmesser des Messschnitts. Der Gradient berechnet sich demnach aus einem Quotient einer Durchmesserdifferenz des Messschnitts zwischen den beiden Abbildern zu der zuvor definierten Strecke. Als Einheit wäre beispielsweise "Bildpunkte/m" denkbar. Weist demnach beispielsweise der Messschnitt in dem ersten Abbild einen Durchmesser von 600 Bildpunkten auf und in dem zweiten Abbild von 350 Bildpunkten und ist dabei das Kameraelement in dem zu untersuchenden Rohr um eine Strecke von 0,10 m in die einer Aufnahmerichtung des Kameraelements entgegen gesetzte Richtung entlang der Längsachse des Rohres bewegt worden, so läge ein Gradient von (600 - 350) / 0,1 = 250 / 0,1 = 2500 Bildpunkte/m vor. Ein derart berechneter Gradient ließe dann einen Rückschluss auf den jeweilig vorliegenden Rohrdurchmesser zu, sofern aus vorigen Kalibrierungsmessungen bekannt ist, für welchen Rohrdurchmesser ein derartiger Gradient typisch ist. Generell lässt sich dabei sagen, dass ein umso kleinerer Gradient tendenziell zu einem umso größeren Rohrdurchmesser gehört.

Eine besondere Erleichterung für die erfolgreiche Durchführung des Verfahrens besteht darin, dass in der Praxis ausschließlich genormte und somit diskrete Nennweiten für Rohre vorkommen. Eine Notwendigkeit einer millimetergenauen Bestimmung eines Rohrdurchmessers entfällt somit. Beispielsweise im Bereich des häuslichen Abwassers werden üblicherweise Kreisprofile mit Nennweiten DN 50, DN 75 und DN 100 eingesetzt. Eine Durchmesserbestimmung eines jeweiligen Rohres ist also bereits dann erfolgreich, wenn zwischen jeweilig vorliegenden diskreten Größen unterschieden werden kann. Generell liegt dabei keine Begrenzung eines Einsatzbereiches des Verfahrens vor. Gegebenenfalls mag lediglich eine Kalibrierung des Kameraelements an speziellen Nennweiten im Vorfeld einer Durchführung des Verfahrens notwendig werden. Ebenfalls ist es möglich, neben Kreisprofilen auch andere Profilformen eines Rohres zu untersuchen, wie beispielsweise Ei- oder Maulprofile. Eine Beschränkung des erfindungsgemäßen Verfahrens auf Kreisprofile liegt nicht vor.

Aufgrund der diskreten Nennweiten ist die Durchführung des Verfahrens dann besonders vorteilhaft, wenn der Rohrdurchmesser ohne eine genaue Berechnung des Gradienten bestimmt wird, indem ein Verhältnis von Durchmessern eines Messschnitts zwischen dem ersten und dem zweiten Abbild unmittelbar einem Gradientintervall und letztlich einem Rohrdurchmesser zugeordnet wird.

Eine derartige Vorgehensweise hängt direkt mit der vorstehend beschriebenen Berechnung des Gradienten zusammen. Dieser lässt sich - wie beschrieben - aus einem Verhältnis einer Durchmesserveränderung zwischen den beiden Abbildern zu der Strecke, entlang derer das Kameraelement virtuell oder physisch bewegt wird, berechnen. Wird eben diese Strecke konstant gehalten, so ist eine explizite Berechnung des Gradienten nicht weiter notwendig, sondern es ist vielmehr bereits ausreichend, eine Durchmesserdifferenz des Messschnitts zwischen den beiden Abbildern zu kennen, sofern entsprechende Erfahrungswerte vorliegen. Diese können sehr einfach durch Testmessungen an Rohren mit bekannten Nennweiten beziehungsweise bekannten Durchmessern ermittelt werden. Eine Auswertung einer Durchmesserbestimmung eines Rohres könnte sich folglich so darstellen, dass auf dem Bildwiedergabeelement anhand virtueller Hilfslinien bestimmte Bereiche vorgegeben werden, die bei einer Betrachtung des Messschnitts aus dem zweiten Abbild unmittelbar einen Schluss auf den jeweilig vorliegenden Rohrdurchmesser zulassen, indem festgestellt wird, um wie viele Bildpunkte der Durchmesser des Messschnitts in dem zweiten Abbild gegenüber dem ersten Abbild kleiner beziehungsweise größer erscheint (je nach Bewegungsrichtung des Kameraelements). Separate Datenauswertungen jeglicher Art entfallen somit vollständig, was zu einem enormen Kosten und Zeitvorteil gegenüber Verfahren nach dem Stand der Technik beiträgt.

Neben der Methode der tatsächlichen, physischen Verschiebung des Kameraelements ist es ferner - wie bereits vorstehend angedeutet - möglich, das Kameraelement nur scheinbar, also virtuell zu verschieben. Dies gelingt unter Verwendung einer Zoomfunktion eines entsprechenden Kameraelements. Äquivalent zu einem Verschieben des Kameraelements entlang der optischen Achse zwischen den Aufnahmen der beiden Abbilder, ist es demnach genauso möglich, eine Vergrößerung oder eine Verkleinerung des von dem Kameraelements erfassten Rohrausschnitts mittels der Zoomfunktion zu bewirken. Je nachdem, wie groß der jeweils vorliegende Rohrdurchmesser ist, wirkt sich ein entsprechender Zoom um einen zuvor zu definierenden Faktor auf eine Größe des in den Abbildern dargestellten Durchmessers des Messschnitts aus. Die Differenz bei einem bestimmten Zoomfaktor gibt äquivalent zur vorstehend beschriebenen Verfahrensweise unter Verwendung einer bekannten Strecke schließlich eine Information über den jeweilig vorliegenden Rohrdurchmesser.

Für den Fall, dass die Strecke zwischen dem ersten und dem zweiten Abbild physisch zurückgelegt wird, sollte darauf geachtet werden, dass eine Brennweite des Kameraelements bei den Aufnahmen des ersten und des zweiten Abbildes identisch ist.

Eine Variation der Brennweite würde zu einer Verfälschung der Durchmesserverhältnisse des Messschnitts zwischen dem ersten und dem zweiten Abbild führen, da ein Zoom des I<ameraelements verändert würde. Für eine erfolgreiche Bestimmung des Rohrdurchmessers sollte die Brennweite daher konstant gehalten werden. Äquivalent sollte bei einer virtuellen Bewegung des Kameraelements mittels eines Zooms, also mittels einer vorsätzlichen Veränderung der Brennweite des Kameraelements, eine Position des Kameraelements konstant gehalten werden.

Wird die Strecke physisch zurückgelegt, sollte ferner ein Betrachtungswinkel des I<ameraelements bei den Aufnahmen des ersten und des zweiten Abbildes identisch sein.

Eine Variation des Betrachtungswinkels des Kameraelements von dem ersten zu dem zweiten Abbild würde zu einer Verfälschung der Verhältnisse der Durchmesser des Messschnittes führen und sollte daher vermieden werden.

Ferner wird die Aufgabe erfindungsgemäß und gemäss Anspruch 8 durch die folgenden Verfahrensschritte gelöst:
b) An einer Stelle des Rohres wird ein Messschnitt durch eine Wandung des Rohres gelegt, der als eine Schnittkurve der Wandung mit einer Ebene definiert ist, die senkrecht zu einer optischen Achse des Kameraelements ausgerichtet ist.
c) Der Messschnitt wird in einem Abbild des Rohres entweder virtuell mittels einer Zoomfunktion des Kameraelements oder physisch mittels einer Lageänderung des Kameraelements derart positioniert, dass er das Abbild annähernd ausfüllt.
d) Mittels einer Fokussierung wird der Messschnitt in dem Abbild fokussiert.
e) Mittels einer Information über ein Maß der Fokussierung wird der Rohrdurchmesser bestimmt.

Identisch zum vorstehend erläuterten Verfahren wird ein Messschnitt an einer bestimmten Stelle des zu vermessenden Rohres definiert. Das Kameraelement wird daraufhin derart relativ zu diesem Messschnitt positioniert, dass dieser einen Bildbereich des Kameraelements annähernd vollständig ausfüllt. Dieser Vorgang kann mittels einer Kontrolle an dem Bildwiedergabeelement besonders einfach gesteuert werden, unabhängig davon, ob dies mittels einer Zoomfunktion oder etwa eine Lageänderung des Kameraelements einhergeht. Über eine Fokussierung des Kameraelements auf den Messschnitt kann abschließend ein Rückschluss auf den jeweilig vorliegenden Rohrdurchmesser gezogen werden.

Vorteilhafterweise gelingt dies, indem eine Fokussierung des Messschnitts ein bestimmtes Maß annimmt, welches aus dem Kameraelement beispielsweise über ein Datenkabel ausgelesen werden kann. Eine derartige Information über das Maß der Fokussierung erlaubt eine Schlussfolgerung bezüglich eines Abstandes des Messschnitts von dem Kameraelement. Ein Verhältnis schließlich, welches sich aus dem Durchmesser des Messschnitts in dem Abbild und der zugehörigen Entfernung des Messschnitts von dem Kameraelement ermitteln lässt, ermöglicht eine eindeutige Bestimmung des jeweilig vorliegenden Nenndurchmessers. Um eine derartige Zuordnung zweifelsfrei durchführen zu können, ist auch unter Verwendung dieses erfindungsgemäßen Verfahrens eine vorige Kalibrierung der Kamera an entsprechenden Rohren mit bekannten Durchmessern notwendig. Generell gilt, dass ein Messschnitt umso kleiner auf dem Bildwiedergabeelement erscheint, desto weiter er von dem Kameraelement entfernt ist. Umgekehrt ist ein Rohrdurchmesser als umso größer zu bewerten, desto weiter er bei einer annähernden Ausfüllung des Bildwiedergabeelements beziehungsweise des Abbildes von dem Kameraelement entfernt ist. Sofern entsprechende Bezugswerte von bekannten Rohrdurchmessern vorliegen, ist ein Rohrdurchmesser unter Verwendung dieses Verfahrens überaus einfach und schnell ermittelbar.

### Ausführungsbeispiele

Die erfindungsgemäßen Verfahren werden nachfolgend anhand von Ausführungsbeispielen, die in den Figuren dargestellt sind, näher erläutert.

Es zeigt:
- Fig. 1:: einen Verfahrensschritt eines erfindungsgemäßen Verfahrens zur Bestimmung eines Rohrdurchmessers eines in einem Längsschnitt dargestellten Rohres,
- Fig. 2:: wie Figur 1, jedoch ein späterer Verfahrensschritt eines ersten erfindungsgemäßen Verfahrens,
- Fig. 3:: wie Figur 1, jedoch ein späterer Verfahrensschritt eines zweiten erfindungsgemäßen Verfahrens und
- Fig. 4:: einen Verfahrensschritt eines alternativen Verfahrens zur Bestimmung eines Rohrdurchmessers eines in einem Längsschnitt dargestellten Rohres.

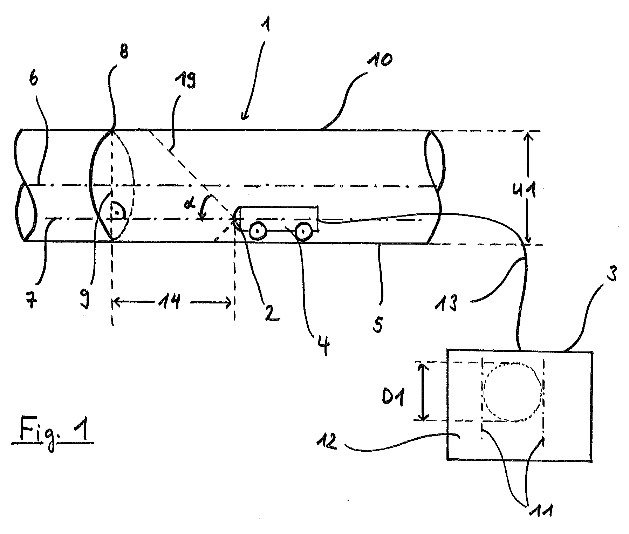

In einem Verfahrensschritt eines erfindungsgemäßen Verfahrens, welcher in Figur 1 dargestellt ist, wird ein Rohr 1 mit einem kreisförmigen Querschnitt mittels einer Vorrichtung, aufweisend ein Kameraelement 2 und ein Bildwiedergabeelement 3, untersucht. Das Rohr 1 weist einen unbekannten Durchmesser U1 auf. Das Kameraelement 2 ist auf einem Roboter 4 montiert, der in einer Sohle 5 des Rohres 1 entlang einer Längsachse 6 des Rohres 1 bewegt werden kann. Das Kameraelement 2 weist eine optische Achse 7 auf, die eine Ausrichtung eines Bildaufnahmebereichs definiert. Es weist ferner eine gewisse feststehende Brennweite auf, so dass das Kameraelement 2 einen gewissen Bereich des Rohres 1 ablichtet, welcher auf dem Bildwiedergabeelement 3 abgebildet wird. Ein Erfassungswinkel α zwischen der optischen Achse 7 und einer Grenzgeraden 19 beschreibt einen Bereich, den das I<ameraelement 2 optisch erfasst.

In dem dargestellten Verfahrensschritt wird ein an einer Stelle 8 festgelegter Messschnitt 9 mittels des Kameraelements 2 aufgenommen. Üblicherweise werden dabei solche Stellen 8 genutzt, die eindeutig identifizierbar sind, beispielsweise Nahtstellen in dem Rohr 1 oder aber Fehlstellen. Ebenfalls ist es möglich, dass der Roboter 4 ein Markierungselement aufweist, mit dem die Stelle 8, an der der Messschnitt 9 untersucht werden soll, markiert werden kann, so dass diese später wieder auffindbar ist. Der Messschnitt 9 ist orthogonal zu der optischen Achse 7 orientiert und wird durch eine Schnittkurve einer zu der optischen Achse 7 senkrechten Ebene mit einer Wandung 10 des Rohres 1 definiert.

Der Roboter 4 mitsamt dem auf ihm montierten Kameraelement 2 wird derart in der Sohle 5 des Rohres 1 positioniert, dass der Messschnitt 9 so auf dem Bildwiedergabeelement 3 orientiert ist, dass er zwei Hilfslinien 11 optimalerweise jeweils tangiert. Die Hilfslinien 11 werden virtuell über ein erstes Abbild 12, das von dem Kameraelement 2 über ein Kommunikationskabel 13 auf das Bildwiedergabeelement 3 übertragen wird, gelegt und haben einen Abstand von 550 Bildpunkten, so dass ein Durchmesser D1 des Messschnitts 9 in dem Abbild 12 ebenfalls 550 Bildpunkte groß erscheint. Ein Abstand 14 des Kameraelements 2 von dem Messschnitt 9 ist unbekannt.

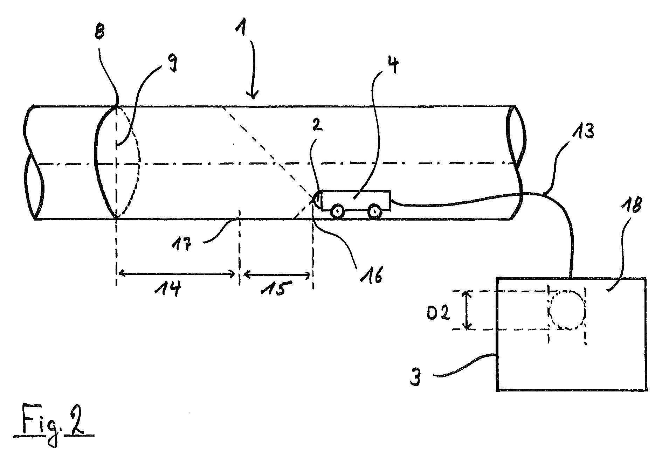

In einem nachfolgenden, anhand von Figur 2 dargestellten Verfahrensschritt wird der Roboter 4 um eine Strecke 15 von 10 cm in eine einer Betrachtungsrichtung des Kameraelements 2 entgegen gesetzte Richtung in der Sohle 5 des Rohres 1 bewegt. Die Brennweite des Kameraelements 2 bleibt konstant. Von einer Endposition 16 aus, die wie erläutert 10 cm von einer Ausgangsposition 17 entfernt ist, wird mittels des Kameraelements 2 ein zweites Abbild 18 aufgenommen und wiederum auf dem Bildwiedergabeelement 3 dargestellt. Aufgrund einer Vergrößerung eines Abstandes zwischen dem Kameraelement 2 und dem Messschnitt 9, ist ein zweiter Durchmesser D2 des Messschnitts 9 in dem Abbild 18 kleiner als der Durchmesser D1 in dem Abbild 12 und weist einen Wert von 500 Bildpunkten auf.

Auf Basis dieser Informationen lässt sich nachfolgend ein Gradient ermitteln, der aus einem Quotient der Differenz der Durchmesser D1 und D2 des Messschnitts 9 aus den beiden Abbildern 12 und 18 und der Strecke 15 errechnet wird. In diesem Ausführungsbeispiel errechnet sich der Gradient zu (550 - 500) Bildpunkte / 0,1 m = 500 Bildpunkte/m.

Unter Hinzuziehung von Kalibrierungswerten kann abschließend aufgrund des errechneten Gradienten eine Aussage über den unbekannten Durchmesser U1 des Rohres 1 getroffen werden. Insbesondere ist es möglich, allein aufgrund der Differenz der Durchmesser D1 und D2 eine Aussage über den unbekannten Durchmesser U1 des Rohres 1 zu treffen, sofern stets mit einer konstanten Strecke 15 gearbeitet wird, für die Kalibrierungswerte bekannt sind. Wird also beispielsweise unter Verwendung des Kameraelements 2 eine Kalibrierungsmessung an einem Rohr mit einem bekannten Durchmesser - beispielsweise an einem Rohr der Nennweite DN 100 - durchgeführt, indem das Kameraelement 2 von seiner Anfangsposition 17 in seine Endposition 16 um eine Strecke 15 von 10 cm bewegt wird, ergibt sich eine Differenz der gemessenen Durchmesser D1 und D2 des Messschnitts 9 der Abbilder 12 und 18. Diese Differenz kann nachfolgend eindeutig der Nennweite DN 100 zugeordnet werden. Tritt nun bei einer Bestimmung eines Rohrdurchmessers eine ungefähr gleiche Differenz der Durchmesser D1 und D2 unter Verwendung einer Strecke 15 von wiederum 10 cm auf, so lässt sich daraus schlussfolgern, dass abermals ein Rohr mit einer Nennweite DN 100 vorliegt. Eine explizite Berechnung eines Gradienten, wie vorstehend beschrieben, entfällt.

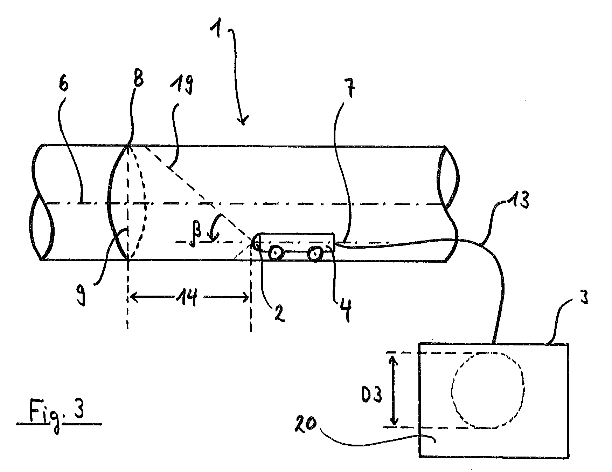

Anhand von Figur 3 wird ein Verfahrensschritt verdeutlicht, der alternativ zu einem physischen Bewegen des Kameraelements 2 eingesetzt werden kann. Ausgangsbasis für den weiteren Verfahrensschritt ist der bereits unter Zuhilfenahme von Figur 1 erläuterte erfindungsgemäße Verfahrensschritt.

Anstelle einer Aufbringung einer physischen Bewegung des Roboters 4 inklusive des Kameraelements 2, wird ein Zoom des Kameraelements verändert. Dies wirkt sich auf einen Winkel β zwischen der optischen Achse 7 und der Grenzgeraden 19 aus. In dem dargestellten Beispiel ist dieser Winkel β gegenüber dem Winkel α aus Figur 1 reduziert worden. Ein Durchmesser D3 des Messschnitts 9 erscheint in einem Abbild 20 auf dem Bildwiedergabeelement 3 entsprechend gegenüber dem Durchmesser D1 aus Figur 1 vergrößert. Der Durchmesser D3 weist in diesem Beispiel einen Wert von 625 Bildpunkten auf. Ein Gradient berechnet sich demzufolge in Anlehnung an eine vorstehend gezeigte Berechnung aus einem Verhältnis einer Durchmesserdifferenz zu einem aufgebrachten Zoomfaktor. Sofern Kalibrierungswerte vorhanden sind, lässt sich auch auf diese Weise ein Durchmesser des Rohres 1 bestimmen.

Der Effekt einer Veränderung des Durchmessers D1 des Messschnitts 9 hin zu dem Durchmesser D3 von Abbild 12 zu Abbild 20 ist vergleichbar mit einer physischen Lageänderung des Kameraelements 2 gemäß dem in Figur 2 dargestellten Verfahrensschritt. Eine physische Bewegung wird jedoch nicht aufgebracht, weshalb in diesem Zusammenhang der Begriff einer virtuellen Bewegung verwendet wird.

Ein Vorteil einer Durchführung des erfindungsgemäßen Verfahrens unter Aufbringung einer virtuellen Bewegung des Kameraelements 2 liegt darin, dass die optische Achse 7 bei den in Figur 1 und Figur 3 dargestellten Verfahrensschritten identisch ist, während diese bei einer physischen Bewegung des Kameraelements 2 nur annähernd gleich gehalten werden kann. Ferner ist eine Durchführung des Verfahrens mittels einer virtuellen Bewegung zügiger und einfacher durchführbar. Ein Nachteil liegt jedoch in einer Notwendigkeit eines zoomfähigen Kameraelements 2.

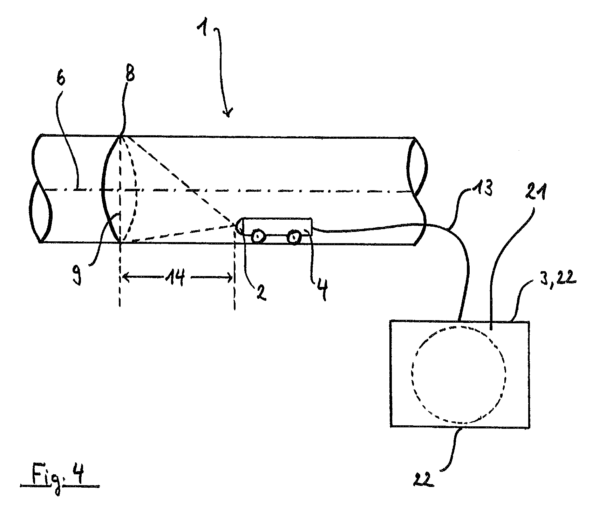

Unter Anwendung eines alternativen Verfahrens wird der Rohrdurchmesser mittels einer Fokussierung auf den Messschnitt 9 ermittelt. Zu diesem Zweck sollte der mittels des Kameraelements 2 aufgenommene Messschnitt 9 in etwa so erfasst werden, dass er ein Abbild 21 annähernd ausfüllt. Dies ist besonders einfach mittels einer Zoomfunktion des Kameraelements 2 erreichbar, kann aber ebenso mittels einer Änderung des Abstandes 14 zwischen dem Kameraelement 2 und dem Messschnitt 9 erreicht werden. Ein Effekt eines Zoomens auf den Messschnitt 9 ist in Figur 4 dargestellt. Das Abbild 21 kann direkt von einem Anwender der Vorrichtung auf dem Bildwiedergabeelement 3 begutachtet werden. Der Anwender zoomt so lange auf den Messschnitt 9 zu, bis dieser annähernd bildausfüllend auf dem Bildwiedergabeelement 3 zu sehen ist. Ein Abbildungsbereich des Bildwiedergabeelements 3 entspricht in diesem Beispiel einer in Bildpunkten gemessenen Größe des Abbildes 21. Als bildausfüllend ist dabei zu verstehen, dass der Messschnitt 9 zumindest nah an zwei gegenüberliegenden Rändern 22 des Abbildes 21 liegt, so dass ein weiteres Erhöhen eines Zoomfaktors dazu führen würde, dass der Messschnitt 9 nicht länger vollständig auf dem Abbild 21 dargestellt ist. Ein solcher Fall ist in Figur 4 abgebildet.

Anschließend an eine derartige Positionierung des Messschnitts 9 in dem Abbild 21 wird auf den Messschnitt 9 mittels einer Fokussierung des Kameraelements 2 fokussiert, so dass dieser scharf in dem Abbild 21 - und folglich auf dem Bildwiedergabeelement 3 - erkennbar ist. Beispielsweise über ein Datenkabel, lässt sich im Anschluss an diese Fokussierung eine Information über ein Maß der Fokussierung auslesen. Mittels dieser Information kann nachfolgend festgestellt werden, wie groß der Abstand 14 zwischen dem Messschnitt 9 und dem Kameraelement 2 ist. Insgesamt liegen dem Anwender somit drei Informationen vor: Er weiß in welchem Abstand 14 der Messschnitt 9 relativ zu dem Kameraelement 2 positioniert ist, er kennt einen Zoomfaktor des Kameraelements 2 und er weiß, dass der Messschnitt 9 annähernd bildausfüllend in dem Abbild 21 ausgerichtet ist. Unter Hinzuziehung von Kalibrierungswerten kann aufgrund dieser Kombination festgestellt werden, welchen Rohrdurchmesser das Rohr 1 im Einzelnen aufweist.

Dies hängt damit zusammen, dass bei einer bildausfüllenden Positionierung des Messschnitts 9 in dem Abbild 21 bei einem bestimmten Zoomfaktor ein umso größerer Abstand 14 nötig ist, desto größer der Rohrdurchmesser des Rohres 1 ist. Vergleichbar ist bei einem bestimmten Abstand 14 und einer bildausfüllenden Positionierung des Messschnitts 9 in dem Abbild 21 der Zoomfaktor des Kameraelements 2 umso größer, desto kleiner der Rohrdurchmesser des Rohres 1 ist.

### Bezugszeichenliste

- 1: Rohr
- 2: Kameraelement
- 3: Bildwiedergabeelement
- 4: Roboter
- 5: Sohle
- 6: Längsachse
- 7: Achse
- 8: Stelle
- 9: Messschnitt
- 10: Wandung
- 11: Hilfslinie
- 12: erstes Abbild
- 13: Kommunikationskabel
- 14: Abstand
- 15: Strecke
- 16: Endposition
- 17: Ausgangsposition
- 18: Zweites Abbild
- 19: Grenzgerade
- 20: Abbild
- 21: Abbild
- 22: Rand

- D1: Durchmesser
- D2: Durchmesser
- D3: Durchmesser
- U1: Durchmesser

## Patentansprüche

1. Verfahren zur Bestimmung eines Rohrdurchmessers mittels einer Vorrichtung, aufweisend ein Kameraelement (2) und ein Bildwiedergabeelement (3), aufweisend folgende Verfahrensschritte:
a) Das Kameraelement (2) wird in einem Rohr (1) in einer ersten Position positioniert.
b) Mittels des Kameraelements (2) wird ein erstes Abbild (12) eines Messschnitts (9) des Rohres (1) aufgenommen, wobei eine optische Achse (7) des Karneraelements (2) in etwa parallel zu einer Längsachse (6) des Rohres (1) ausgerichtet ist.
c) Mittels des Kameraelements (2) wird ein zweites Abbild (18, 20) des Messschnitts (9) des Rohres (1) aufgenommen,
wobei die optische Achse (7) in etwa parallel zu der Längsachse (6) des Rohres (1) ausgerichtet ist.
d) Durch einen Vergleich der beiden Abbilder (12, 18, 20) wird der Rohrdurchmesser bestimmt,
**gekennzeichnet durch** den folgenden Verfahrensschritt;
e) Nachdem das erste Abbild (12) aufgenommen ist und bevor das zweiten Abbild (18, 20) aufgenommen wird, wird das Kameraelement (2) entweder virtuell mittels einer Zoomfunktion des Kameraelements (2) oder physisch über eine definierte Strecke (15) im Wesentlichen parallel zu der Längsachse (6) des Rohres (1) in eine zweite Position bewegt.

2. Verfahren nach Anspruch 1, **dadurch gekennzeichnet, dass** an einer Stelle des Rohres (1) ein Messschnitt (9) durch eine Wandung (10) des Rohres (1) gelegt wird, der sowohl in dem ersten als auch in dem zweiten Abbild (12, 18, 20) erfasst wird, wobei der Messschnitt (9) als Schnittkurve der Wandung (10) mit einer Ebene definiert ist, die senkrecht zu der optischen Achse (7) des Kameraelements (2) ausgerichtet ist.

3. Verfahren nach Anspruch 2, **dadurch gekennzeichnet, dass** der Messschnitt (9) und das Kameraelement (2) derart relativ zueinander positioniert werden - physisch oder virtuell -, dass der Messschnitt (9) das erste Abbild (12) annähernd ausfüllt.

4. Verfahren nach einem der Ansprüche 1 bis 3, **dadurch gekennzeichnet, dass** aus einer Differenz zwischen Durchmessern (D1, D2, D3) eines Messschnitts (9) in dem ersten und dem zweiten Abbild (12, 18, 20) ein Gradient bezüglich der Strecke (15) ermittelt wird, aus dem ein Rückschluss auf den Rohrdurchmesser gezogen wird.

5. Verfahren nach Anspruch 4, **dadurch gekennzeichnet, dass** der Rohrdurchmesser ohne eine genaue Berechnung des Gradienten bestimmt wird, indem ein Verhältnis von Durchmessern (D1, D2, D3) eines Messschnitts (9) zwischen dem ersten und dem zweiten Abbild (12, 18, 20) unmittelbar einem Gradientintervall und letztlich einem Rohrdurchmesser zugeordnet wird.

6. Verfahren nach einem der Ansprüche 1 bis 5, **dadurch gekennzeichnet, dass** im Fall einer physischen Bewegung des Kameraelements (2) in dem Rohr (1) eine Brennweite des Kameraelements (2) bei den Aufnahmen des ersten und des zweiten Abbildes (12, 18) identisch ist.

7. Verfahren nach einem der Ansprüche 1 bis 7, **dadurch gekennzeichnet, dass** im Fall einer physischen Bewegung des Kameraelements (2) in dem Rohr (1) ein Betrachtungswinkel des Kameraelements (2) bei den Aufnahmen des ersten und des zweiten Abbildes (12, 18) identisch ist.

8. Verfahren zur Bestimmung eines Rohrdurchmessers mittels einer Vorrichtung, aufweisend ein Kameraelement (2) und ein Bildwiedergabeelement (3), aufweisend folgenden Verfahrensschritt:
a) Das Kameraelements (2) wird in einem Rohr (1) in einer ersten Position positioniert,
**gekennzeichnet durch** die folgenden Verfahrensschritte:
b) An einer Steile (8) des Rohres (1) wird ein Messschnitt (9) **durch** eine Wandung (10) des Rohres (1) gelegt, der als eine Schnittkurve der Wandung (10) mit einer Ebene definiert ist, die senkrecht zu einer optischen Achse (7) des Kameraelements (2) ausgerichtet ist.
c) Der Messschnitt (9) wird in einem Abbild (21) des Rohres (1) entweder virtuell mittels einer Zoomfunktion des Kameraelement (2) oder physisch mittels einer Lageänderung des Kameraelement (2) derart positioniert, dass er das Abbild (21) annähernd ausfüllt.
d) Mittels einer Fokussierung wird der Messschnitt (9) in dem Abbild (21) fokussiert.
e) Mittels einer Information über ein Maß der Fokussierung wird der Rohrdurchmesser bestimmt.

9. Verfahren nach Anspruch 8, **dadurch gekennzeichnet, dass** die Fokussierung eine Information über eine Entfernung des Messschnitts (9) von dem Kameraelement (2) gibt, mittels derer der Rohrdurchmesser bestimmt wird.

## Claims

1. A method for determining a pipe diameter by means of a device having a camera element (2) and an image playback element (3), comprising the following methods steps:
a) the camera element (2) is positioned in a pipe (1) in a first position;
b) a first image (12) of a measurement section (9) of the pipe (1) is recorded by means of the camera element (2), wherein an optical axis (7) of the camera element (2) is aligned approximately parallel to a longitudinal axis (6) of the pipe (1);
c) a second image (18, 20) of the measurement section (9) of the pipe (1) is recorded by means of the camera element (2),
wherein the optical axis (7) is aligned approximately parallel to the longitudinal axis (6) of the pipe (1);
d) the pipe diameter is determined by comparing the images (12, 18, 20);
**characterized by** the following method step:
e) after the first image (12) has been recorded and before the second image (18, 20) is recorded, the camera element (2) is moved into a second position essentially parallel to the longitudinal axis (6) of the pipe (1), either virtually by means of a zoom function of the camera element (2) or physically over a defined distance (15).

2. A method according to claim 1, **characterized in that** a measuring section (9) is drawn through a wall (10) of the pipe (1) at a location on the pipe (1), and this section is detected in the first image as well as in the second image (12, 18, 20), wherein the measuring section (9) is defined as a sectional curve of the wall (10) with a plane, which is aligned perpendicular to the optical axis (7) of the camera element (2).

3. The method according to claim 2, **characterized in that** the measuring section (9) and the camera element (2) are positioned relative to one another - physically or virtually - in such a way that the measuring section (9) approximately fills up the first image (12).

4. The method according to any one of claims 1 to 3, **characterized in that** a gradient with regard to the distance (15) is determined from the difference between the diameters (D1, D2, D3) of a measuring section (9) in the first and second images (12, 18, 20) and then used to draw a conclusion as to the pipe diameter.

5. The method according to claim 4, **characterized in that** the pipe diameter is determined without an accurate calculation of the gradient, by assigning a ratio of diameters (D1, D2, D3) of a measuring section (9) between the first image and the second image (12, 18, 20) directly to a gradient interval and ultimately to a pipe diameter.

6. The method according to any one of claims 1 to 5, **characterized in that** in the case of a physical movement of the camera element (2) in the pipe (1), the focal distances of the camera element (2) in photographs of the first and second images (12, 18) are identical.

7. The method according to any one of claims 1 to 7, **characterized in that** in the case of a physical movement of the camera element (2) in the pipe (1), the angle of observation of the camera element (2) is identical in the photographs of the first and the second images (12, 18).

8. The method for determining the pipe diameter by means of a device, comprising a camera element (2) and an image playback element (3), comprising the following method step:
a) the camera element (2) is positioned in a first position in a pipe (1),
**characterized by** the following methods steps:
b) a measuring section (9) is drawn through a wall (10) of the pipe (1) at a location (8) on the pipe (1), which is defined as a plane aligned perpendicular to an optical axis (7) of the camera element (2), this plane being aligned as a sectional curve of the wall (10);
c) the measuring section (9) is positioned in an image (21) of the pipe (1) either virtually by means of a zoom function of the camera element (2) or physically by means of a change in position of the camera element (2), such that it approximately fills out the image (21);
d) the measuring section (9) is focused in the image (21) by means of focusing;
e) the pipe diameter is determined by means of information about a measure of focusing.

9. The method according to claim 8, **characterized in that** the focusing provides information about the distance of the measuring section (9) from the camera element (2) by means of which the pipe diameter is determined.

## Revendications

1. Procédé de détermination d'un diamètre de tuyau au moyen d'un dispositif comportant un élément de caméra (2) et un élément de restitution d'image (3), comportant les étapes de procédé suivantes:
a) l'élément de caméra (2) est positionné dans un tuyau (1) dans une première position,
b) une première image (12) d'une coupe de mesure (9) du tuyau (1) est enregistrée au moyen de l'élément de caméra (2), un axe optique (7) de l'élément de caméra (2) étant orienté à peu près parallèlement à un axe longitudinal (6) du tuyau (1),
c) une deuxième image (18, 20) de la coupe de mesure (9) du tuyau (1) est enregistrée au moyen de l'élément de caméra (2),
l'axe optique (7) de l'élément de caméra (2) étant orienté à peu près parallèlement à l'axe longitudinal (6) du tuyau (1),
d) le diamètre de tuyau est déterminé par une comparaison des deux images (12, 18, 20),
**caractérisé par** l'étape de procédé suivante:
e) une fois la première image (12) enregistrée et avant que la deuxième image (18, 20) ne soit enregistrée, l'élément de caméra (2) est déplacé soit virtuellement au moyen d'une fonction de zoom de l'élément de caméra (2), soit physiquement sur une distance définie (15) pour l'essentiel parallèlement à l'axe longitudinal (6) du tuyau (1) dans une deuxième position.

2. Procédé selon la revendication 1, **caractérisé en ce qu'**une coupe de mesure (9) à travers une paroi (10) du tuyau (1) est placée à un endroit du tuyau (1), qui est saisie aussi bien dans la première que dans la deuxième image (12, 18, 20), la coupe de mesure (9) étant définie comme courbe de coupe de la paroi (10) avec un plan qui est orienté perpendiculairement à l'axe optique (7) de l'élément de caméra (2).

3. Procédé selon la revendication 2, **caractérisé en ce que** la coupe de mesure (9) et l'élément de caméra (2) sont positionnés l'un par rapport à l'autre, physiquement ou virtuellement, de telle manière que la coupe de mesure (9) remplit approximativement la première image (12).

4. Procédé selon l'une quelconque des revendications 1 à 3, **caractérisé en ce qu'**un gradient concernant la distance (15) est déterminé à partir d'une différence entre les diamètres (D1, D2, D3) d'une coupe de mesure (9) dans la première et la deuxième image (12, 18, 20), à partir duquel est tirée une déduction sur le diamètre de tuyau.

5. Procédé selon la revendication 4, **caractérisé en ce que** le diamètre de tuyau est déterminé sans un calcul exact du gradient, un rapport des diamètres (D1, D2, D3) d'une coupe de mesure (9) entre la première et deuxième image (12, 18, 20) est directement affecté à un intervalle de gradient et finalement à un diamètre de tuyau.

6. Procédé selon l'une quelconque des revendications 1 à 5, **caractérisé en ce qu'**en cas d'un déplacement physique de l'élément de caméra (2) dans le tuyau (1), une distance focale de l'élément de caméra (2) est identique lors des prises de la première et de la deuxième image (12, 18).

7. Procédé selon l'une quelconque des revendications 1 à 7, **caractérisé en ce qu'**en cas d'un déplacement physique de l'élément de caméra (2) dans le tuyau (1), un angle d'observation de l'élément de caméra (2) est identique lors des prises de la première et de la deuxième image (12, 18).

8. Procédé pour la détermination d'un diamètre de tuyau au moyen d'un dispositif comportant un élément de caméra (2) et d'un élément de restitution d'image (3) comportant l'étape de procédé suivante:
a) l'élément de caméra (2) est positionné dans un tuyau (1) dans une première position,
**caractérisé par** les étapes de procédé suivantes:
b) une coupe de mesure (9) à travers la paroi (10) du tuyau (1) est placée à un endroit (8) du tuyau (1), qui est défini comme une courbe de coupe de la paroi (10) avec un plan, qui est orienté perpendiculairement à un axe optique (7) de l'élément de caméra (2),
c) la coupe de mesure (9) est positionnée dans une image (21) du tuyau (1) soit virtuellement au moyen d'une fonction de zoom de l'élément de caméra (2), soit physiquement au moyen d'une modification de longueur de l'élément de caméra (2) de telle manière que l'image (21) est à peu près remplie,
d) la coupe de mesure (9) est focalisée dans l'image (21) au moyen d'une focalisation,
e) le diamètre de tuyau est déterminé au moyen d'une information sur une mesure de focalisation.

9. Procédé selon la revendication 8, **caractérisé en ce que** la focalisation donne une information sur une distance de la coupe de mesure (9) depuis l'élément de caméra (2), au moyen de laquelle le diamètre de tuyau est déterminé.
